# FASCICULE DE BREVET EUROPEEN

(11) **EP 2 443 361 B1**
(45) Date de publication et mention de la délivrance du brevet: **10.08.2016**
(21) Numéro de dépôt: 09806177.3
(22) Date de dépôt: 03.12.2009
(51) Int. Cl.: F16D 69/00, F16D 69/04

(54) **SEGMENT POUR FREIN A TAMBOUR, ET FREIN A TAMBOUR ASSOCIE**
RING FÜR TROMMELBREMSE UND ZUGEHÖRIGE TROMMELBREMSE
RING FOR DRUM BRAKE AND RELATED DRUM BRAKE

(30) Priorité: 17.06.2009 FR 0902944
(43) Date de publication de la demande: 25.04.2012
(73) Titulaire: Sonomev Freins (S.A.S.), 83520 Roquebrune sur Argens (FR)
(72) Inventeur: RICCI, Gérard, F-83700 Saint Raphaël (FR)
(74) Mandataire: Nicolle, Olivier
(86) Numéro de dépôt international: PCT/FR2009/001372
(87) Numéro de publication internationale: WO 2010/146247

(56) Documents cités:
- DE-A1- 2 111 529
- GB-A- 379 618
- US-A- 2 630 889
- US-A- 3 064 343
- US-A1- 2005 077 127

## Description

La présente invention concerne un segment de frein à tambour à commande pneumatique ou hydraulique pour véhicule, notamment pour véhicule poids lourd ou pour des engins spéciaux dotés de freins à tambour présentant une grande capacité de freinage.

L'invention a pour but de faciliter le remplacement des garnitures usagées des freins à tambour, en limitant le nombre de pièces à démonter et à remonter, et en évitant en particulier le démontage des mâchoires de frein.

### ETAT DE LA TECHNIQUE

On connaît depuis longtemps les freins à tambour, qui sont un système de freinage constitué d'un tambour, à l'intérieur duquel se trouvent au moins deux mâchoires munies de garnitures. Leur fonction est de s'écarter grace à des cames ou des pistons actionnés lors du freinage, provoquant ainsi un frottement important entre la garniture et le tambour. Ce frottement induit un effet de freinage en rotation du tambour par rapport aux mâchoires et aux garnitures. Le tambour étant solidaire de la roue du véhicule, celle-ci se trouve freinée.

Les cames sont typiquement actionnées par une commande mécanique (câble, tirant), et les pistons sont actionnés par une commande hydraulique.

Compte tenu de la concurrence de la technologie des freins à disque et de leurs avantages spécifiques (moins de risque de blocage, meilleure résistance à l'échauffement), les freins à tambour ont été largement remplacés par les freins à disque sur un nombre croissant de véhicules à moteur.

Cependant, compte tenu de leur couple de freinage supérieur et de leur meilleur comportement en milieu boueux, les freins à tambour conservent tout leur intérêt pour le freinage des véhicules lourds, tels que les camions poids-lourds, et pour les engins militaires.

Pour ce type de véhicules, l'entretien des freins à tambour existants représente un budget conséquent, et une source de coûts de fonctionnement non négligeable.

En effet, la maintenance des freins à tambour nécessite une immobilisation de plusieurs heures du véhicule, d'autant plus lorsqu'il s'agit de véhicules poids-lourds qui comportent un grand nombre d'essieux, et par conséquent un grand nombre de roues et de freins.

Une opération de maintenance typique consiste alors à déposer l'intégralité du système de freinage, puis à démonter entièrement le frein, soit : démonter les vis, ressorts, points fixes, désolidariser le tambour et la mâchoire qui porte les garnitures constituant les pièces d'usure. Ensuite on remonte des garnitures neuves, et on réassemble le frein, qu'on remonte ensuite sur le véhicule.

En outre, la garniture est rivetée directement sur la mâchoire, ce qui impose, pour remplacer la garniture, de déposer le frein, de démonter la mâchoire, puis de démonter les rivets de fixation pour enlever la garniture usée. Il faut ensuite riveter une nouvelle garniture sur la mâchoire, avant de remonter entièrement le frein et de reposer le frein sur le véhicule.

On connaît de par le document DE 2111529 un frein à tambour pourvu d'une cassette pourvue d'une garniture de friction, ladite cassette pouvant être désolidarisée de la jante du frein. Mais la conception de cette cassette n'est pas optimisée et n'a pas été mise en oeuvre en pratique.

### BUTS DE L'INVENTION

Un but de l'invention est par conséquent de remédier au problème posé et aux inconvénients des freins à tambour selon l'état de la technique.

Un autre but de l'invention est de proposer un frein à tambour modifié, permettant un remplacement aisé des garnitures, sans nécessiter la dépose des mâchoires du frein.

Un autre but de l'invention est de proposer un frein à tambour modifié qui soit aisément adaptable à n'importe quel type de frein à tambour.

### OBJET DE L'INVENTION

Le principe de l'invention consiste à proposer un segment modifié pour frein à tambour. Ce segment se compose d'une mâchoire et d'un support de garniture. Alors que dans l'état de la technique, la garniture de friction est directement rivetée sur l'extrados de la mâchoire, l'invention propose de fournir un support intermédiaire pour la garniture, support qui est alors fixé directement sur la mâchoire, en lieu et place de la fixation de la garniture elle-même sur la mâchoire. La fixation de la garniture sur la mâchoire est donc, selon l'invention, indirecte. Le support de garniture, qu'on appellera dans la suite la « cassette porte-garniture », ou la « plaquette porte-garniture », est une nouvelle pièce dans le domaine des freins à tambour.

Par ailleurs, la cassette porte-garniture n'est pas rivetée sur la mâchoire, ce qui nécessiterait le démontage de celle-ci lors du remplacement des ganitures, mais l'ensemble de la cassette porte-garniture est vissé sur la mâchoire, de sorte qu'il suffit de le dévisser à partir de la mâchoire sans avoir à démonter cette dernière lors d'un remplacement des garnitures usagées. Selon une variante intéressante, au lieu d'être vissée, la cassette porte-garniture est fixée sur la mâchoire à l'aide de broches.

La garniture et son support forment ainsi une cassette qu'il est bien plus aisé de remplacer, et en outre il devient économique de gérer un stock de cassettes porte-garniture pour un échange standard rapide lors des opérations de maintenance des freins à tambour.

Plus précisément, l'invention a pour objet une cassette porte-garniture pour un frein à tambour équipé de segments comportant une mâchoire pourvue d'une jante pour la fixation d'une garniture de friction, l'ensemble formant un segment pour frein à tambour, ladite cassette comportante un support incurvé sous la forme d'un secteur de cylindre apte à être fixé directement sur la jante de ladite machoire, ladite cassette étant pourvue d'une garniture de friction de forme adaptée à celle dudit support.

Selon un mode de réalisation avantageux, la garniture comporte une pluralité de trous traversants et est fixée sur son support par un ensemble de rivets positionnés dans lesdits trous.

En outre, selon un premier mode de fixation de la cassette sur la mâchoire, le support comporte lui-même une pluralité de trous pour la fixation de la cassette porte-garniture sur la mâchoire du segment. La fixation de la cassette porte-garniture sur la jante de la mâchoire est alors obtenue à l'aide de vis auto-freinées qui traversent les trous de fixation de la cassette et dont les extrémités viennent se fixer dans des alésages aménagés dans la jante de la mâchoire.

Le support incurvé possède un gousset de renfort formé par un secteur métallique soudé sous la face inférieure du support de garniture de la cassette porte-garniture. Ce gousset de renfort est pourvu d'orifices, et la mâchoire possède, par exemple au niveau de la jante, des trous correspondants, de sorte que des broches engagées dans ledits orifices et dans lesdits trous permettent de solidariser la cassette porte-garniture de la mâchoire.

Dans les deux modes de réalisation, les garnitures ne sont plus directement rivetées sur la jante de la mâchoire, ce qui imposerait le démontage des mâchoires pour le remplacement des garnitures. Mais au contraire, les garnitures sont fixées sur un support intermédiaire, à savoir le support de la cassette, qui à son tour est fixé sur la jante de la mâchoire, soit par vissage, soit par brochage, de sorte que les garnitures, qui sont les pièces d'usure, ne sont plus en liaison directe avec la jante de la mâchoire.

Avantageusement, quel que soit le mode de fixation de la cassette porte-garniture à la machoire, des moyens de positionnement relatif peuvent être prévus, sous la forme de lumières aménagées dans le support de la cassette, et de bossages correspondants aménagés sur l'extrados de la jante de la machoire, ce qui permet d'assurer un positionnement rapide et précis de la cassette par rapport à la mâchoire, avant leur solidarisation par vis ou par broches.

L'invention a également pour objet un segment pour frein à tambour, comportant une mâchoire composée d'une âme radiale terminée par une jante axiale en forme de secteur de cylindre, caractérisé en ce que ladite jante est adaptée pour recevoir une cassette porte-garniture telle que définie précédemment.

Dans un mode de réalisation économique du segment, la largeur de ladite jante est sensiblement inférieure à la largeur du support de la cassette porte-garniture.

En outre, l'invention a encore pour objet un frein à tambour pour une roue d'un véhicule comportant un plateau, un tambour et au moins deux segments de frein comprenant chacun une mâchoire actionnée par un levier, et une garniture de friction agissant sur le tambour lors d'un freinage, caractérisé en ce que chaque segment comporte une cassette porte-garniture selon l'invention.

D'autres caractéristiques et avantages de l'invention apparaîtront à la lecture de la description détaillée des dessins annexés dans lesquels :
- la figure 1 représente une vue en perspective d'un segment de frein à tambour conforme à l'état actuel de la technique ;
- la figure 2 représente en élévation partiellement en coupe, une mâchoire de frein à tambour pourvue d'une cassette porte-garniture selon l'invention ;
- la figure 2A représente une vue en coupe transversale A-A de la mâchoire de frein à tambour selon la figure 2 ;
- la figure 3 représente une vue en élévation et en coupe de la cassette porte-garniture pour frein à tambour, selon l'invention ;
- la figure 3A représente une vue en coupe transversale A-A d'une cassette porte-garniture de la figure 3 ;
- la figure 4A représente une vue de dessus d'une garniture pour la cassette porte-graniture selon l'invention ;
- la figure 4B représente une vue de côté de la garniture de la figure 4A.
- la figure 5 représente en élévation partiellement en coupe, une variante de mâchoire de frein à tambour pourvue d'une cassette porte-garniture selon l'invention ;
- la figure 5A représente une vue en coupe transversale A-A d'une cassette porte-garniture de la figure 5 ;
- la figure 6 représente une vue en élévation d'une autre variante de mâchoire de frein à tambour destinée à recevoir une cassette porte-garniture selon l'invention ;
- la figure 7 représente une vue de dessus de la mâchoire de frein à tambour de la figure 6 ;
- la figure 8 représente une vue en plan d'une broche pour la fixation de la cassette porte-garniture sur la mâchoire de la figure 7 ;
- la figure 9 représente une vue en perspective d'un ressort utilisé pour le maintien de la broche de la figure 8 ;
- la figure 10 représente une vue en perspective éclatée d'une mâchoire de frein à tambour correspondant à la variante de la figure 6, pourvue d'une cassette porte-garniture selon l'invention.

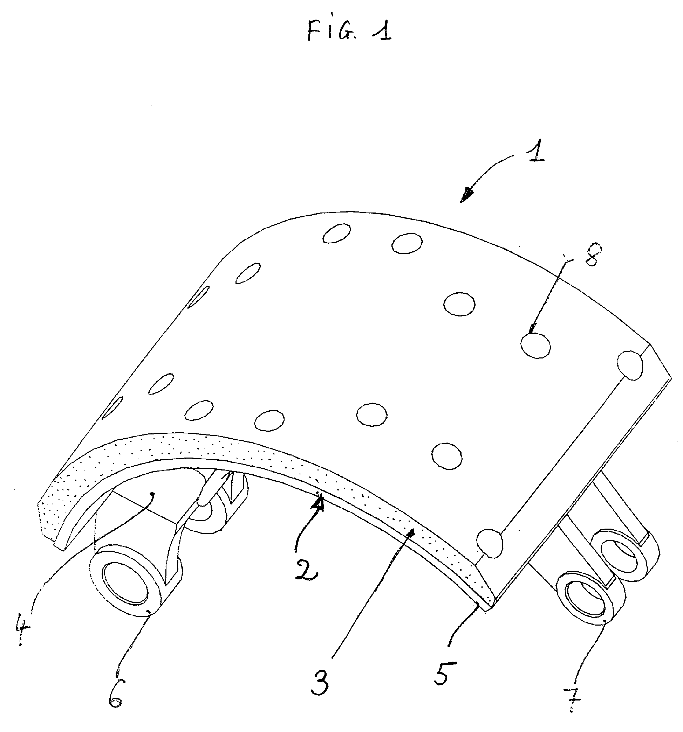

On a représenté en figure 1 un segment de frein à tambour selon l'état actuel de la technique. La structure des freins à tambours complets étant bien connue dans l'état de la technique, il n'est pas nécessaire de décrire un frein existant dans son intégralité.

Comme on le voit, le segment de frein 1 se compose d'une mâchoire 2 qui assure la rigidité du segment, et d'une garniture de friction 3 destinée à entrer en contact avec l'intérieur du tambour, lors d'un freinage.

La mâchoire 2 est pourvue d'une âme radiale 4 de forme arquée, surmontée d'une jante axiale 5 en forme de secteur cylindrique, qui est globalement perpendiculaire à l'âme radiale 4.

La mâchoire 2 se termine à chaque extrémité par une fourche pourvue de paliers, à savoir un palier 7 prévu pour un galet, et un palier 6 prévu pour un point fixe.

L'âme 4 et la jante 5 de la mâchoire sont typiquement en fonte ou en acier.

La largeur de la jante 5 est égale à la largeur de la garniture 3, ce qui augmente le poids du segment, notamment lorsque la jante est également en fonte.

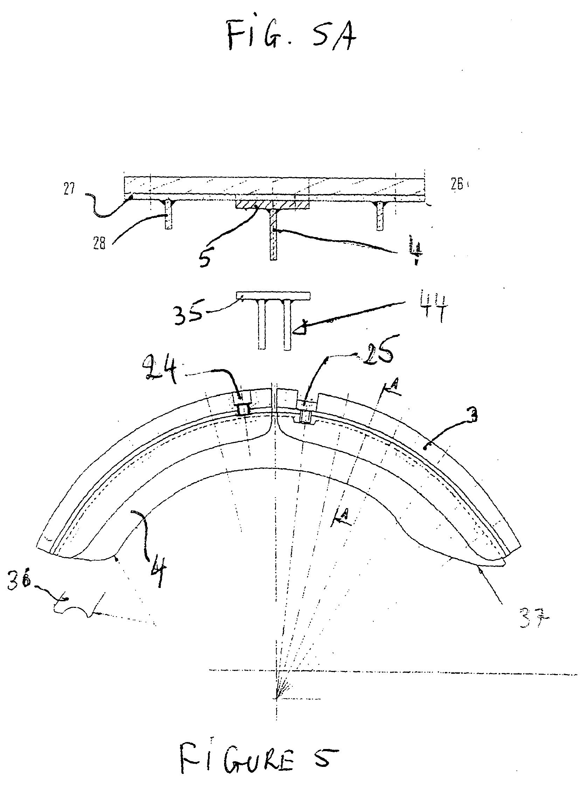

Dans la figure 5, on a réprésenté une autre variante de forme de mâchoire. Mais il est à noter que la mâchoire 2 décrite avec ses extrémités 6,7 et une âme 4 ainsi qu'une jante 2 peut encore adopter d'autres formes de technologie de construction non réprésentées, sans pour autant limiter la portée de la présente invention. Ces autres modes de construction de la mâchoire sont en général spécifiques aux différents constructeurs.

Dans l'état de la technique, la garniture 3 est fixée directement sur la jante 5 du segment par un ensemble de rivets tubulaires 8. Par conséquent, lorsque la garniture est usagée, afin de pouvoir démonter la garniture 3 par rapport à la jante 5, il est nécéssaire de percer les rivets 8, et par conséquent il faut déposer l'intégralité du segment 1, ce qui impose de démonter l'ensemble du frein à tambour, avec les conséquences déjà décrites en termes de temps de main-d'oeuvre et de coût d'immobilisation du véhicule.

### Premier mode de réalisation de l'invention:

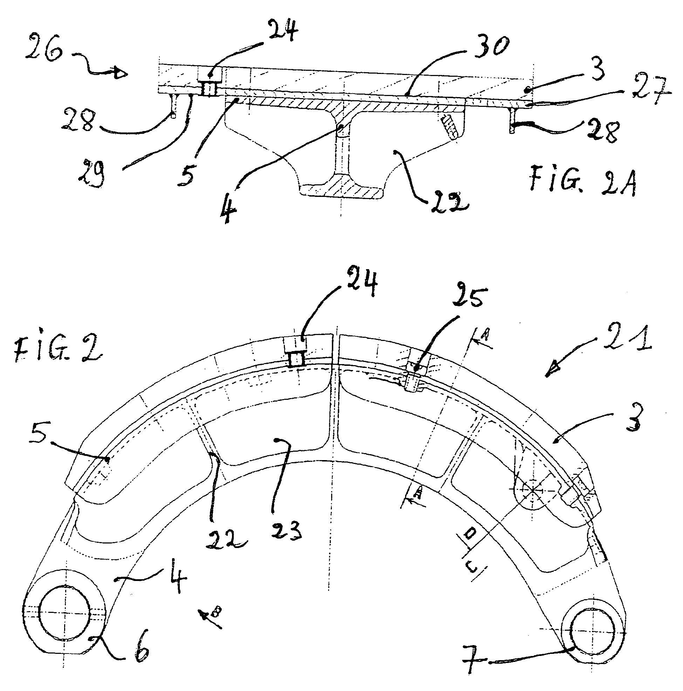

On se réfère maintenant à la figure 2. Dans cette figure, on a représenté en élévation un segment 21 pour frein à tambour conforme à l'invention. Il comporte une mâchoire sensiblement en arc de cercle, pourvue d'un palier 6 prévu pour un axe de point fixe, et un palier 7 prévu pour un galet. La mâchoire comporte une âme radiale 4, renforcée par des nervures transversales 22.

L'extrémité radiale de l'âme 4 comporte une jante 5 en forme de secteur cylindrique, sur laquelle est fixée une cassette porte-garniture 26 (Figure 2A) conforme à l'invention. Cette cassette porte-garniture 26 comporte un support ou flasque métallique 27, qui fait office de jante à l'égard de la garniture 3, et qui est également de forme cylindrique, adaptée à la forme extérieure cylindrique de la jante 5 de la mâchoire 4.

La cassette porte-garniture 26 comporte en outre, sur l'intégralité de la largeur du support métallique 27, une garniture de friction 3, connue en elle-même, et destinée à coopérer avec la surface interne du tambour, non représenté.

La garniture de friction 3 est de préférence fixée sur le support métallique 27 par des rivets 24.

De façon avantageuse, la cassette porte-garniture 26 comporte en outre des goussets de renfort 28, sous la forme de flasques en arc de cercle soudés perpendiculairement sur la face interne 29 (figure 2A) du support métallique 27, qui est opposée à la face externe 30 de celui-ci, qui porte la garniture de friction 3.

Grâce à ces goussets de renfort 28, il est possible de réduire la largeur de la jante 5 de la mâchoire 4, de façon que la jante 5 ait maintenant une largeur inférieure à celle de la cassette porte-garniture 26. Cela permet globalement d'alléger le segment garni 21 et de réduire son coût de fabrication.

La cassette porte-garniture 26 est fixée à la jante 5 de la mâchoire 4 par une série de vis freinées 25 (Figure 2), traversant le support métallique 27 de la cassette 26 depuis sa face externe 30, et venant s'insérer dans des pas de vis aménagés dans la jante 5 de la mâchoire 4.

Il résulte de la structure selon l'invention que la cassette porte-garniture 26 représente une structure intermédiaire indépendante, aisée à démonter à partir du segment 21. Sans la cassette porte-garniture 26, le segment 21 est nu et simplement réduit à une mâchoire, redimensionnée avec une jante moins large que dans l'état de la technique. Avec la cassette porte-garniture 26 en place, le segment 21 est dit « garni ».

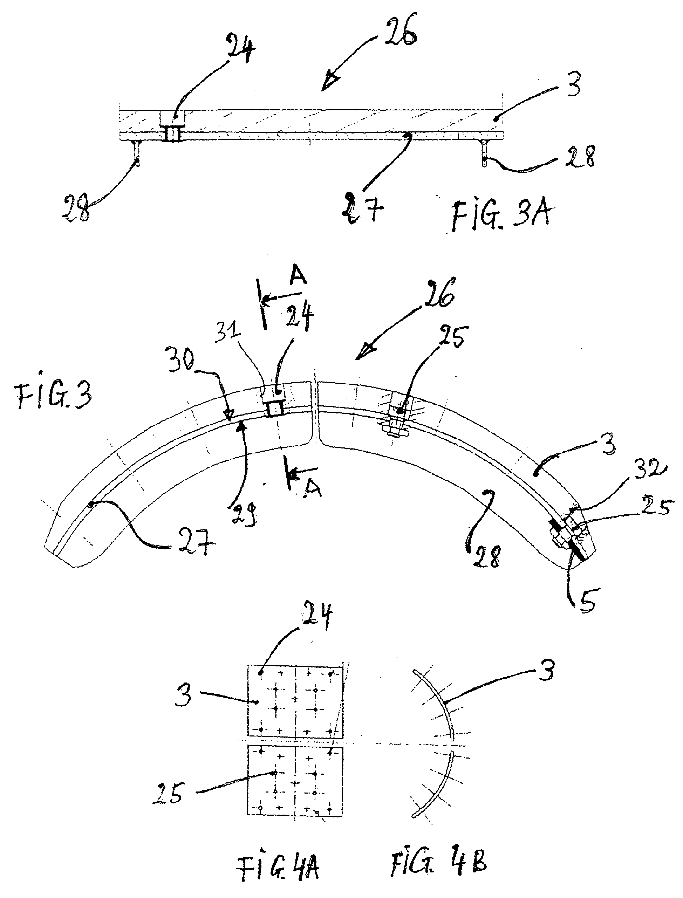

On se réfère maintenant aux figures 3 et 3A où l'on voit mieux la structure de la cassette porte-garniture 26, dans son état démonté par rapport à la mâchoire. La vue en section transversale de la figure 3A fait apparaître la structure radiale de la cassette porte-garniture 26, constituée de l'empilement du support métallique 27 et de la garniture 3 fixée sur le support métallique 27 à l'aide de rivets 24. Cette figure fait également apparaître en section transversale (Figure 3A), les goussets de renfort 28 du support métallique 27, qui sont optionnels, mais permettent de rigidifier davantage celui-ci pour éviter toute flexion intempestive du support pendant le freinage.

En figure 3, on a fait apparaître des ensembles vis-écrou 25 montés dans des trous 32 traversant la garniture 3 et le support métallique 27. Ces ensembles vis-écrou 25 permettent de fixer, de façon aisément démontable, la cassette porte-garniture 26 à la jante 5 (représentée en trait interrompu sur la figure 2).

Bien entendu, l'homme du métier saura dimensionner les différents composants cités, en fonction des efforts de freinage à appliquer.

Comme représenté en figures 4A et 4B, dans un mode de réalisation standard du segment de freinage 21 selon l'invention, on prévoira n rivets 24 par mâchoire, et m vis de fixation 25 par garniture et segment, sachant qu'il y a en général deux segments par frein à tambour, et une ou plusieurs garnitures 3 par mâchoire et donc par segment. Dans un exemple de réalisation usuel, on prendra par exemple n = 16 et m = 8, mais l'homme du métier sera à même de faire le meilleur choix en fonction des normes et des besoins spécifiques à chaque cas de figure.

Dans les figures 5 et 5A on a représenté une variante de réalisation dans laquelle lâme simple 4 de la mâchoire peut être remplacée par une âme double 44 soudée une une jante 35.

En outre, comme représenté en 36 et 37, les extrémités de l'âme peuvent avoir des formes variées selon les habitudes des différents constructeurs.

De façon classique, les matières utilisées pour les mâchoires et pour les supports 27 des cassettes de freinage 26 sont la fonte et l'acier, qui permettent une bonne diffusion de la chaleur alliée à une élasticité suffisante en cours de fonctionnement.

Grâce à ce premier mode de réalisation de l'invention, une opération de rénovation d'un frein à tambour comporte maintenant les étapes suivantes :
- démonter la roue ;
- démonter le tambour du frein, en gardant la mâchoire en place ;
- dévisser les vis de fixation 25 de la cassette porte-garniture 26 qui porte les garnitures 3 usagées ;
- remplacer la cassette porte-garniture usagée par une cassette porte-garniture 26 neuve, et revisser les vis de fixation 25 ;
- remonter le tambour
- remonter la roue.

En conséquence, on note en particulier qu'il est possible de conserver tous les règlages d'origine du frein (vis, ressorts), puisque la mâchoire n'est pas démontée.

### Second mode de réalisation de l'invention :

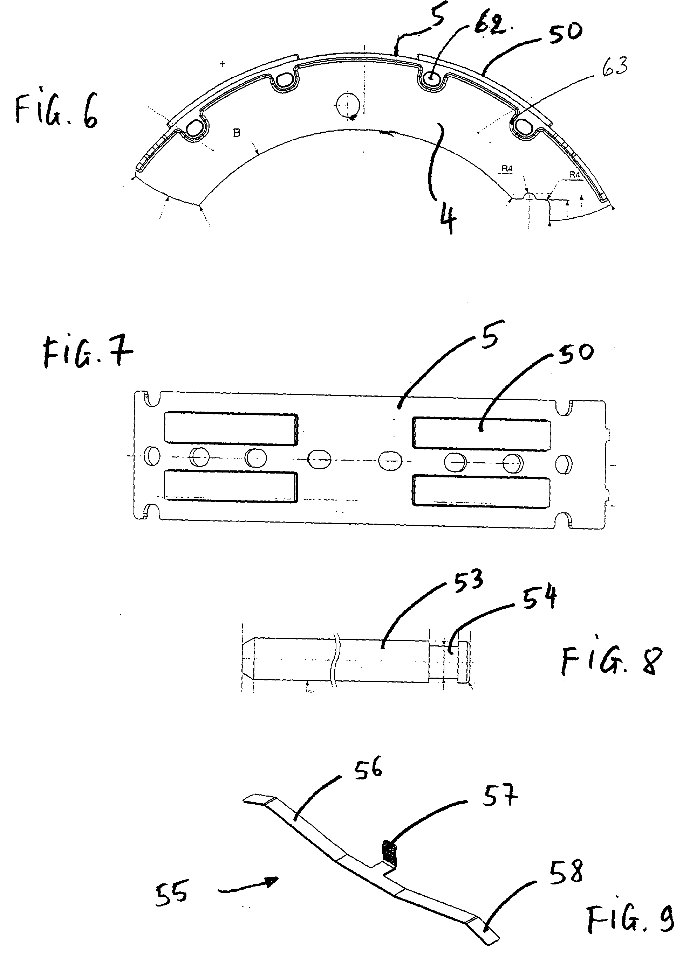

On se réfère maintenant aux figures 6 à 10 pour décrire une variante encore plus intéressante de l'invention, dans laquelle on a modifié le mode de positionnement et de fixation de la cassette porte-graniture 26 sur la mâchoire.

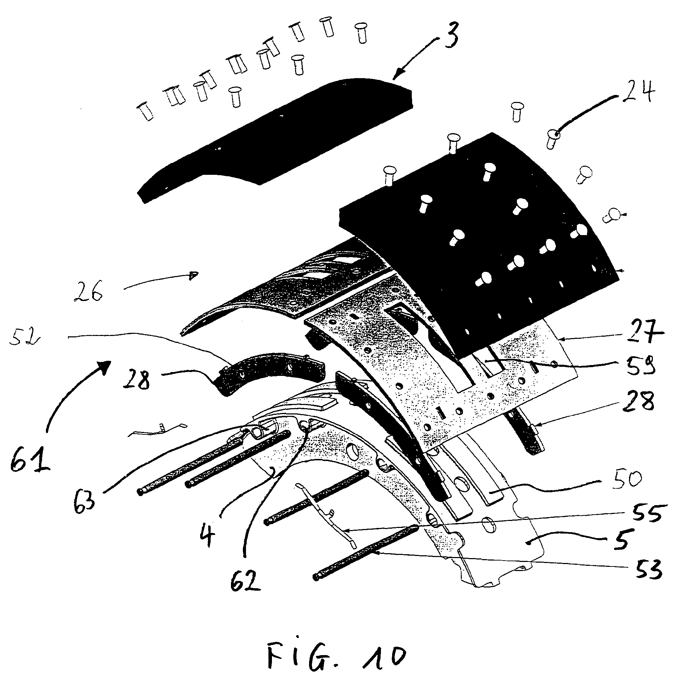

A cet effet, la cassette porte-garniture 26 comporte des lumières 59 (figure 10) aménagées sur son support, et ces lumières 59 viennent coopérer avec des bossages 50 correspondants aménagés sur l'extrados de jante 5 de la mâchoire. Cela permet un positionnement latéral précis de la cassette 26 par rapport à la jante 5, tout en conservant un peu de jeu dans le sens longitudinal des lumières, permettant un léger flottement angulaire de la cassette 26 par rapport à la janet 5 de la mâchoire.

En outre, cette disposition contribue à une meilleure résistance à l'effort de freinage, qui est reporté sur la section transversale des bossages 50, au lieu d'être reporté sur la section plus faible, des vis de fixation 25 dans le mode de réalisation précédent.

Dans le mode de réalisation préféré décrit en relation aux figures 6 à 10, il est néanmoins nécessaire d'assurer la fixation de la cassette porte-garniture 26 sur la mâchoire, une fois que les bossages 50 sont correctement engagés dans les lumières 59.

A cet effet, les goussets 28 de la cassette 26 sont pourvus d'orifices 52 qui sont dans l'alignement de trous axiaux 62 correspondants aménagés au niveaux de bossages 63 réalisés sur l'âme 4 de la mâchoire. Lorsque la cassette 26 est en place sur la jante de la mâchoire, des broches 53 sont alors engagées dans les orifices 52 de la cassete, puis dans les trous axiaux 62 de la mâchoire, ce qui a pour effet de solidariser la cassette 26 sur la mâchoire du segment.

Afin d'assurer que les broches 53 restent bien en place malgré les efforts et les vibrations dues au freinage, des ressorts 55 sont positionnés sur deux broches 53 contigues. Les ressorts 55 sont réalisés par exemple en un élément métallique plat dont les extrémités 58 s'engagent dans une gorge 54 réalisée sur chaque broche (figure 8). En outre, chaque ressort 55 est retenu sur la mâchoire par une patte 57 qui vient s'engager dans une fente (non représentée) aménagée dans la partie inférieure des goussets de renfort 28.

En plus de sa meilleure résistance aux efforts de freinage, cette disposition préférée permet un montage et un démontage encore plus rapide des cassettes porte-garniture, puisque l'étape de dévissage et re-vissage des vis de fixation 25 a disparu, au profit d'une étape plus rapide de pose des broches 53 et des ressorts 55.

Grâce à ce second mode de réalisation de l'invention, une opération de rénovation d'un frein à tambour comporte maintenant les étapes suivantes :
- démonter la roue ;
- démonter le tambour du frein, en gardant la mâchoire en place ;
- retirer les ressorts 55 et les broches 53 ;
- déposer la cassette porte-garniture 26 qui porte les garnitures 3 usagées ;
- remplacer la cassette porte-garniture usagée par une cassette porte-garniture 26 neuve en positionnant les lumières 59 de la cassette sur les bossages 50 de la jante 5;
- reposer les broches 53 et les ressorts 55 ;
- remonter le tambour
- remonter la roue.

### Troisème mode de réalisation de l'invention:

Il est à noter qu'un troisième mode de réalisation de l'invention peut être envisagé. Il s'agit d'un mode mixte entre les premiers et seconds mode de réalisation, dans lequel on conserverait le mode de fixation de la cassette 26 sur la mâchoire à l'aide de vis 25 comme dans le premier mode de réalisation, mais le positionnement de la cassette 26 par rapport à la mâchoire se ferait à l'aide de la combinaison de bossages 50 de la jante 5 et de lumières 59 du support 27 de la cassette 26, comme dans le second mode de réalisation.

Bien entendu, le mode opératoire pour une rénovation de frein à tambour, serait adapté en conséquence.

### AVANTAGES DE L'INVENTION

L'invention permet de répondre aux problèmes posés. Elle se traduit par un coût moindre de la maintenance des systèmes de freins à tambour, notamment du fait qu'elle permet d'immobiliser un minimum de temps le véhicule. En effet, elle permet un changement nettement plus rapide des garnitures usagées.

Compte tenu de la valeur réduite des éléments qui portent les garnitures (à savoir la cassette de freinage intermédiaire), le stock de pièces détachées représente une plus faible valeur immobilisée, d'où une meilleure rentabilité pour les réparateurs.

En outre, le frein modifié selon l'invention permet une adaptation aisée aux freins les plus représentatifs du marché, soit par l'intermédiaire de cassettes de freinage pourvues des garnitures standardisées les plus vendues, soit par l'intermédiaire de segments garnis complets, comportant les mâchoires spécifiques aux différents constructeurs de freins ou de véhicules.

Enfin, grâce à l'invention, il est possible d'optimiser la conception de la mâchoire tout en conservant le respect des normes dites WVA pour les garnitures, aux trous de passage près pour la fixation de la cassette porte-garniture. Ces normes WVA définissent pour l'ensemble des fabricants, les caractéristiques dimensionnelles (épaisseur, largeur, diamètre, nombre de trous etc) des garnitures de friction. Sur la figure 4A, celà correspond notamment aux n trous de rivets. Il est à noter que l'invention ne modifie rien à la norme existante, mais ajoute simplement aux garnitures de friction existantes les trous de passage 32 pour la fixation du support de cassette 26, et ce uniquement dans le premier mode de réalisation (figures 2 à 5), alors que dans le second mode de réalisation (figures 6 à 10), les garnitures de friction 3 ne sont pas modifiées du tout et sont en tous points conformes aux normes et à la pratique existantes .

## Revendications

1. Cassette porte-garniture (26) pour un frein à tambour équipé de segments comportant une mâchoire (2) pourvue d'une âme (4 ;44) et d'une jante (5 ;35) pour la fixation d'une garniture de friction (3), l'ensemble formant un segment (21) pour frein à tambour, ladite cassette comportant un support (27) incurvé sous la forme d'un secteur de cylindre apte à être fixé directement sur la jante (5 ;35) de ladite mâchoire, et ladite cassette étant pourvue d'une garniture de friction (3) de forme adaptée à celle dudit support (27), **caractérisée en ce que** ledit support (27) comporte au moins un gousset de renfort (28), formé par au moins un secteur métallique soudé sous la face inférieure dudit support (27).

2. Cassette porte-garniture (26) selon la revendication 1, **caractérisée en ce que** ta garniture (3) comporte une pluralité de trous (31) traversants et est fixée sur le support (27) par un ensemble de rivets (24) positionnés dans lesdits trous traversants.

3. Cassette porte-garniture (26) selon la revendication 1, **caractérisée en ce que** ledit support (27) comporte une pluralité de trous (32) pour le passage d'éléments de fixation de la cassette porte-garniture (26) sur la jante (5 ;35) de la mâchoire (2).

4. Cassette porte-garniture (26) selon la revendication 3, **caractérisée en ce que** la fixation de la cassette porte-garniture (26) sur la jante (5 ;35) de la mâchoire (2) est obtenue à l'aide de vis auto-freinées (25) qui traversent les trous de fixation (32) de la cassette et dont les extrémités viennent se fixer dans des alésages aménagés dans la jante (5 ;35) de la mâchoire (2).

5. Cassette porte-garniture (26) selon la revendication 1 ou la revendication 2, **caractérisée en ce que** le support (27) de la cassette porte-garniture (26) est pourvu d'au moins une lumière (59), destinée à coopérer avec un bossage correspondant (50) aménagé sur la jante (5 ;35) de la mâchoire (2) afin d'assurer le positionnement de la cassette porte-garniture (26) par rapport à la jante (5 ;35) du segment.

6. Cassette porte-garniture (26) selon l'une quelconque des revendications précédentes, **caractérisé en ce que** le gousset de renfort (28) de la cassette (26) est pourvu d'orifices (52) et **en ce que** le support (27) de la cassette (26) est pourvu de trous (62) axiaux correspondants et alignés avec lesdits orifices (52) du gousset, de façon que des broches (53) rapportées et insérées dans les trous (62) de la cassette et les orifices (52) du gousset de renfort (28) permettent de fixer la cassette porte-garniture (26) sur la jante (5) du segment.

7. Cassette porte-garniture (26) selon la revendication 6, **caractérisée en ce que** les broches (53) comportent à leurs extrémités des gorges (54) dans lesquelles viennent s'engager les extrémités de ressorts (55) reliés à la jante (5) et maintenant en place les broches (53).

8. Cassette porte-garniture (26) selon la revendication 1 ou 2, **caractérisée en ce qu'**elle comporte en combinaison les moyens de fixation de la garniture de friction (3) selon les revendications 3 et 4, et les moyens de positionnement de la cassette porte-garniture (26) par rapport à la jante (5 ;35) selon l'une quelconque des revendications 5 à 7.

9. Segment (21) pour frein à tambour, comportant une mâchoire (2) composée d'une âme radiale (4 ;44) terminée par une jante axiale (5 ;35) en forme de secteur de cylindre, **caractérisé en ce que** ladite jante (5 ;35) est adaptée pour recevoir une cassette porte-garniture (26) selon l'une quelconque des revendications précédentes.

10. Segment (21) selon la revendication 11, **caractérisé en ce que** la largeur de ladite jante (5 ;35) est sensiblement inférieure à la largeur du support (27) de la cassette porte-garniture (26).

11. Frein à tambour pour une roue d'un véhicule comportant un plateau, un tambour et au moins deux segments (21) de frein comprenant chacun une mâchoire (2) actionnée par un levier, et une garniture de friction (3) agissant sur le tambour lors d'un freinage, **caractérisé en ce que** chaque segment (21) comporte une cassette porte-garniture (26) selon l'une quelconque des revendications 1 à 9.

12. Frein à tambour selon la revendication 11, **caractérisé en ce que** ladite cassette porte-garniture (26) est fixée sur la jante (5 ;35) de la mâchoire (2) du segment par des ensembles vis-écrou ou des vis auto-freinées (25).

13. Frein à tambour selon la revendication 11, **caractérisé en ce que** ladite cassette porte-garniture (26) est fixée sur la jante (5 ;35) de la mâchoire (2) par un ensemble de broches (53) engagées dans des orifices (52) aménagés sur la cassette (26) et des trous (62) correspondants aménagés sur la mâchoire (2), lesdites broches (53) étant retenues par des ressorts (53).

## Patentansprüche

1. Kassette eines Belagträgers (26) für eine Trommelbremse, die mit Segmenten ausgestattet ist, umfassend eine Backe (2), die mit einem Kern (4; 44) und einer Felge (5; 35) zum Befestigen eines Reibbelags (3) ausgestattet ist, wobei die Anordnung ein Segment (21) für eine Trommelbremse bildet, wobei die Kassette einen gebogenen Träger (27) in Form eines Zylindersektors aufweist, der geeignet ist, direkt auf der Felge (5; 35) der Backe befestigt zu werden und wobei die Kassette mit einem Reibbelag (3) von einer Form ausgestattet ist, die an jene des Trägers (27) angepasst ist, **dadurch gekennzeichnet, dass** der Träger (27) mindestens einen Verstärkungszwickel (28) aufweist, der aus mindestens einem metallischen Sektor gebildet ist, der unter die Unterseite des Trägers (27) geschweißt ist.

2. Kassette eines Belagträgers (26) nach Anspruch 1, **dadurch gekennzeichnet, dass** der Belag (3) mehrere Durchgangslöcher (31) aufweist und auf dem Träger (27) durch einen Satz Nieten (24) befestigt ist, die in den Durchgangslöchern angeordnet sind.

3. Kassette eines Belagträgers (26) nach Anspruch 1, **dadurch gekennzeichnet, dass** der Träger (27) mehrere Löcher (32) für den Durchgang von Elementen zum Befestigen der Kassette eines Belagträgers (26) auf der Felge (5; 35) der Backe (2) aufweist.

4. Kassette eines Belagträgers (26) nach Anspruch 3, **dadurch gekennzeichnet, dass** das Befestigen der Kassette des Belagträgers (26) auf der Felge (5; 35) der Backe (2) mittels selbstsichernden Schrauben (25) erreicht wird, die die Befestigungslöcher (32) der Kassette durchqueren und deren Enden in Bohrungen befestigt sind, die in der Felge (5; 35) der Backe (2) angeordnet sind.

5. Kassette eines Belagträgers (26) nach Anspruch 1 oder 2, **dadurch gekennzeichnet, dass** der Träger (27) der Kassette des Belagträgers (26) mit mindestens einem Schlitzloch (59) ausgestattet ist, das dazu bestimmt ist, mit einem entsprechenden Buckel (50) zusammenzuwirken, der auf der Felge (5; 35) der Backe (2) angeordnet ist, um das Positionieren der Kassette des Belagträgers (26) gegenüber der Felge (5; 35) des Segments zu gewährleisten.

6. Kassette eines Belagträgers (26) nach einem der vorhergehenden Ansprüche, **dadurch gekennzeichnet, dass** der Verstärkungszwickel (28) der Kassette (26) mit Öffnungen (52) versehen ist und dass der Träger (27) der Kassette (26) mit entsprechenden axialen Löchern (62), die mit den Öffnungen (52) des Zwickels ausgerichtet sind, derart versehen ist, dass Stifte (53), die aufgesteckt und in die Löcher (62) der Kassette und die Öffnungen (52) des Verstärkungszwickels (28) eingefügt sind, ermöglichen, die Kassette des Belagträgers (26) auf der Felge (5) des Segments zu befestigen.

7. Kassette eines Belagträgers (26) nach Anspruch 6, **dadurch gekennzeichnet, dass** die Stifte (53) an ihren Enden Kehlen (54) aufweisen, in die die Enden von Federn (55) eingreifen, die mit der Felge (5) verbunden sind und die Stifte (53) in Position halten.

8. Kassette eines Belagträgers (26) nach Anspruch 1 oder 2, **dadurch gekennzeichnet, dass** sie in Kombination die Mittel zum Befestigen des Reibbelags (3) nach den Ansprüchen 3 und 4 und die Mittel zum Positionieren der Kassette des Belagträgers (26) in Bezug auf die Felge (5; 35) nach einem der Ansprüche 5 bis 7 aufweist.

9. Segment (21) für eine Trommelbremse, umfassend eine Backe (2), die aus einem radialen Kern (4; 44) zusammengesetzt ist, der durch eine axiale Felge (5; 35) in Form eines Zylindersektors abgeschlossen ist, **dadurch gekennzeichnet, dass** die Felge (5; 35) geeignet ist, eine Kassette eines Belagträgers (26) nach einem der vorhergehenden Ansprüche aufzunehmen.

10. Segment (21) nach Anspruch 11, **dadurch gekennzeichnet, dass** die Breite der Felge (5; 35) im Wesentlichen kleiner als die Breite des Trägers (27) der Kassette des Belagträgers (26) ist.

11. Trommelbremse für ein Rad eines Fahrzeugs, umfassend eine Platte, eine Trommel und mindestens zwei Bremssegmente (21), die jeweils eine Backe (2) aufweisen, die durch einen Hebel betätigt wird, und einen Reibbelag (3), der bei einem Bremsen auf die Trommel einwirkt, **dadurch gekennzeichnet, dass** jedes Segment (21) eine Kassette eines Belagträgers (26) nach einem der Ansprüche 1 bis 9 aufweist.

12. Trommelbremse nach Anspruch 11, **dadurch gekennzeichnet, dass** die Kassette des Belagträgers (26) durch Schraube-Mutter-Baugruppen oder selbstsichernde Schrauben (25) auf der Felge (5; 35) der Backe (2) des Segments befestigt ist.

13. Trommelbremse nach Anspruch 11, **dadurch gekennzeichnet, dass** die Kassette des Belagträgers (26) auf der Felge (5; 35) der Backe (2) durch einen Satz von Stiften (53) befestigt ist, die in Öffnungen (52), die in der Kassette (26) angeordnet sind, und entsprechenden Löchern (62), die auf der Backe (2) angeordnet sind, eingesetzt sind, wobei die Stifte (53) von Federn (53) gehalten werden.

## Claims

1. Lining-holder cartridge (26) for a drum brake equipped with shoes comprising a block (2) provided with a web (4; 44) and with a rim (5; 35) for fixing a friction lining (3), the assembly forming a shoe (21) for a drum brake, the said cartridge comprising a curved support (27) in the form of a cylinder sector able to be fixed directly to the rim (5; 35) of the said block, and the said cartridge being provided with a friction lining (3) with a shape adapted to that of the said support (27), **characterized in that** the said support (27) comprises at least one reinforcing gusset (28) formed by at least one metal sector welded under the bottom face of the said support (27).

2. Lining-holder cartridge (26) according to Claim 1, **characterized in that** the lining (3) comprises a plurality of through-holes (31) and is fixed to the support (27) by a set of rivets (24) positioned in the said through-holes.

3. Lining-holder cartridge (26) according to Claim 1, **characterized in that** the said support (27) comprises a plurality of holes (32) for the passage of elements for fixing the lining-holder cartridge (26) to the rim (5; 35) of the block (2).

4. Lining-holder cartridge (26) according to Claim 3, **characterized in that** fixing of the lining-holder cartridge (26) to the rim (5; 35) of the block (2) is obtained with the aid of self-locking screws (25) which pass through the holes (32) for fixing the cartridge and of which the ends are fixed in bores formed in the rim (5; 35) of the block (2).

5. Lining-holder cartridge (26) according to Claim 1 or Claim 2, **characterized in that** the support (27) of the lining-holder cartridge (26) is provided with at least one aperture (59) intended to cooperate with a corresponding protrusion (50) formed on the rim (5; 35) of the block (2) in order to position the lining-holder cartridge (26) with respect to the rim (5; 35) of the shoe.

6. Lining-holder cartridge (26) according to any one of the preceding claims, **characterized in that** the gusset (28) for reinforcing the cartridge (26) is provided with orifices (52) and **in that** the support (27) of the cartridge (26) is provided with corresponding axial holes (62) aligned with the said orifices (52) in the gusset, in such a way that attached pins (53) inserted into the holes (62) in the cartridge and the orifices (52) in the reinforcing gusset (28) make it possible to fix the lining-holder cartridge (26) to the rim (5) of the shoe.

7. Lining-holder cartridge (26) according to Claim 6, **characterized in that** the pins (53) comprise, at their ends, grooves (54) in which there engage the ends of springs (55) which are connected to the rim (5) and keep the pins (53) in place.

8. Lining-holder cartridge (26) according to Claim 1 or 2, **characterized in that** it comprises, in combination, the means for fixing the friction lining (3) according to Claims 3 and 4, and the means for positioning the lining-holder cartridge (26) with respect to the rim (5; 35) according to any one of Claims 5 to 7.

9. Shoe (21) for a drum brake, comprising a block (2) composed of a radial web (4; 44) terminated by an axial rim (5; 35) in a form of a cylinder sector, **characterized in that** the said rim (5; 35) is adapted to receive a lining-holder cartridge (26) according to any one of the preceding claims.

10. Shoe (21) according to Claim 11, **characterized in that** the width of the said rim (5; 35) is substantially less than the width of the support (27) of the lining-holder cartridge (26).

11. Drum brake for a vehicle wheel comprising a plate, a drum and at least two brake shoes (21) each comprising a block (2) actuated by a lever, and a friction lining (3) acting on the drum during a braking operation, **characterized in that** each shoe (21) comprises a lining-holder cartridge (26) according to any one of Claims 1 to 9.

12. Drum brake according to Claim 11, **characterized in that** the said lining-holder cartridge (26) is fixed to the rim (5; 35) of the block (2) of the shoe by screw-nut assemblies or self-locking screws (25).

13. Drum brake according to Claim 11, **characterized in that** the said lining-holder cartridge (26) is fixed to the rim (5; 35) of the block (2) by a set of pins (53) engaged in orifices (52) formed in the cartridge (26) and corresponding holes (62) formed in the block (2), the said pins (53) being retained by springs (53).
